Europäisches Patentamt

European Patent Office

Office européen des brevets

(19)

(11) **EP 1 607 725 A1**

(12) **EUROPEAN PATENT APPLICATION**
published in accordance with Art. 158(3) EPC

(43) Date of publication:
**21.12.2005 Bulletin 2005/51**

(51) Int Cl.⁷: **G01G 3/16**, G01N 5/02

(21) Application number: **04723067.7**

(86) International application number:
**PCT/JP2004/004103**

(22) Date of filing: **24.03.2004**

(87) International publication number:
**WO 2004/085976 (07.10.2004 Gazette 2004/41)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **25.03.2003 JP 2003082829**

(71) Applicant: **SEIKO EPSON CORPORATION
Tokyo 160-0811 (JP)**

(72) Inventor: **KOBAYASHI, Yoshihiro;
Suwa-Shi, Nagano 3928502 (JP)**

(74) Representative: **Hoffmann, Eckart
Patentanwalt,
Bahnhofstrasse 103
82166 Gräfelfing (DE)**

(54) **MASS MEASURING METHOD, CIRCUIT FOR EXCITING PIEZOELECTRIC VIBRATORY PIECE FOR MASS MEASUREMENT, AND MASS MEASURING INSTRUMENT**

(57)     The present invention is directed to reliably perform a mass measurement.

A mass measurement apparatus (10) has an excitation circuit (14) to forcibly excite a piezoelectric vibration reed (12). The excitation circuit (14) comprises a PLL circuit (20). In the PLL circuit (20), a voltage controlled oscillation circuit (24) outputs an excitation signal. The excitation signal is supplied to the piezoelectric vibration reed (12) and a phase comparator (26) via a distributor (22). The phase comparator (26) outputs a signal corresponding to a phase difference between an output signal of the piezoelectric vibration reed (12) and the excitation signal. The signal is passed through a loop filter (28) to be converted to a direct-current voltage and supplied to the voltage controlled oscillator (24) as a control voltage. The voltage controlled oscillator (24) has an oscillation frequency varying in accordance with the control voltage, outputs the excitation signal with no phase difference with respect to the output signal of the piezoelectric vibration reed (12), and causes the piezoelectric vibration reed (12) to resonate. A signal processing unit (16) counts the output frequency of the voltage controlled oscillator (24) and calculates the resonance frequency of the piezoelectric vibration reed (12).

F I G.  1

```
10:   MASS MEASUREMENT APPARATUS
12:   PIEZOELECTRIC VIBRATION REED FOR MASS MEASUREMENT
14:   EXCITATION CIRCUIT
16:   SIGNAL PROCESSING UNIT
20:   PLL CIRCUIT
24:   PRESSURE CONTROLLED OSCILLATOR
```

## Description

Technical Field

The present invention relates to a mass measurement method, and more specifically, it relates to a mass measurement method that is suitable to measure very small mass by detecting the change in oscillating frequency of a piezoelectric vibration reed such as, in particular, a quartz vibration reed, a circuit for exciting the piezoelectric vibration reed for mass measurement, and a mass measurement apparatus.

Background Art

In the fields of food, biochemistry, medical treatment, and the environment, to detect the presence/ absence or to measure the concentration of a specified material, the quartz crystal microbalance (QCM) method using a quartz vibrator has been used. The QCM method uses a quartz vibrator for mass measurement, which includes a quartz vibration reed as a major component. The quartz vibration reed is a piezoelectric vibration reed including a sensitive film which combines with the specified material. The sensitive film of the quartz vibrator for mass measurement has a molecule recognition function for the specified material, which is a target for detection or measurement of concentration, and is provided to cover an excitation electrode of the piezoelectric vibration reed (a quartz vibration reed). Detecting the specified material in liquid or measuring the concentration thereof, for example, using the QCM method is conducted as follows.

The piezoelectric vibration reed including the sensitive film is immersed and oscillated (resonated) in a predetermined liquid, until the oscillation frequency (resonance frequency) in liquid becomes stable. Subsequently, a material causing the material in the liquid to be absorbed or deposited to the sensitive film or causing the material attached to the sensitive film or the material to be detected to be detached from the sensitive film or decomposed is added to the liquid so that the sensitive film on the piezoelectric vibration reed is reacted with the specified target material to be measured. By doing so, the mass of the piezoelectric vibration reed on the excitation electrode increases/decreases, and the resonance frequency of the piezoelectric vibration reed is lowered or raised. Accordingly, the presence/absence and the concentration of the measurement target material in liquid and the mass of the material attached to the sensitive film can be calculated.

For example, if a material in liquid is absorbed into the sensitive film, the higher the concentration of the measurement target material, the faster the rate of reduction of the resonance frequency of the piezoelectric vibration reed. Herein, by determining the rate of reduction of the resonance frequency of the piezoelectric vibration reed, the concentration of the measurement target material in liquid can be measured. Moreover, from the amount of reduction of the resonance frequency, the mass of the measurement target material attached to the excitation electrode by means of the sensitive film can be calculated.

That is, in using the QCM method, the mass of the material attached to the excitation electrode can be calculated using the following Solberry equation below.

$$\Delta F = -F_0{}^2/A(\rho \cdot \mu)^{\frac{1}{2}}\, \Delta m$$

Herein, $\Delta F$ is the amount of change in resonance frequency of the piezoelectric vibration reed, $F_0$ is the initial resonance frequency of the piezoelectric vibration reed, A is the area of the excitation electrode, $\rho$ is the density of the piezoelectric vibration reed, $\mu$ is the shearing stress of the piezoelectric vibration reed, and $\Delta m$ is the mass of the material attached to the electrode.

Further, conventionally, in the case of oscillating the quartz vibrator for the mass measurement in liquid, the quartz vibrator for the mass measurement, which is connected to an oscillation circuit, is immersed in the liquid and oscillated by the oscillation circuit, as disclosed in Japanese Unexamined Patent Application Publication No. 07-43284.

The QCM method often performs the measurement by immersing the piezoelectric vibration reed, which constitutes the quartz vibrator for the mass measurement as described above, in liquid. However, if the piezoelectric vibration reed is immersed in liquid, the crystal inductance (Cl) becomes much larger than in air. For this reason, it is difficult to constitute an oscillation circuit for oscillating the piezoelectric vibration reed in liquid, and it is not possible to oscillate the piezoelectric vibration reed stably in liquid. As a result, it prevents effective measurement.

The present invention is made to solve the problems in the conventional art, and its object is to perform reliably the measurement of a very small mass in liquid.

Disclosure of Invention

To attain the above-described object, the present invention provides a measurement method for detecting mass from the change in vibration frequency of the piezoelectric vibration reed for mass measurement, the method comprising: calculating a phase difference between an excitation signal to be supplied to the piezoelectric vibration reed and an output signal of the piezoelectric vibration reed when the piezoelectric vibration reed is excited by the excitation signal; and adjusting the frequency of the excitation signal in accordance with the phase difference and calculating the vibration frequency of the piezoelectric vibration reed.

According to this constitution, the present invention can supply the piezoelectric vibration reed with a signal output from, for example, other oscillator as the excitation signal to excite forcibly the piezoelectric vibration reed, without exciting the piezoelectric vibration reed for the mass measurement by the oscillation circuit. Accordingly, even when a CI value becomes larger or a Q value is lowered due to the immersion of the piezoelectric vibration reed in liquid, the piezoelectric vibration reed can be excited stably, and a reliable measurement of a very small mass can be performed.

Moreover, in order to attain the above-described measurement method, an excitation circuit of the piezoelectric vibration reed for the mass measurement has a voltage controlled oscillator supplying an excitation signal to the piezoelectric vibration reed for the mass measurement, a phase detection unit for calculating a phase difference between an output signal of the piezoelectric vibration reed and the excitation signal outputted from the voltage controlled oscillator, and a control voltage output unit for supplying a voltage in accordance with the phase difference calculated by the phase detection unit to the voltage controlled oscillator and allowing the excitation signal having the same frequency as that of the output signal of the piezoelectric vibration reed to be outputted to the voltage controlled oscillator.

According to the above-described constitution of the present invention, the phase detection unit calculates the phase difference between the excitation signal outputted from the voltage controlled oscillator and the output signal of the piezoelectric vibration reed which is forcibly excited by the excitation signal, and the control voltage output unit supplies the voltage corresponding to the phase difference to the voltage controlled oscillator and allows the frequency of the excitation signal outputted from the voltage controlled oscillator to coincide with the frequency of the output signal of the piezoelectric vibration reed. In other words, the voltage controlled oscillator, the phase detection unit and the control voltage output unit constitute a PLL (phase locked loop) circuit. Accordingly, it is possible to allow the phase of the excitation signal outputted from the voltage controlled oscillator to coincide with the phase of the output signal of the piezoelectric vibration reed, and frequencies thereof can coincide with each other. The piezoelectric vibration reed does not constitute a self-excitation resonance circuit, so that the piezoelectric vibration reed can be stably excited, even when the piezoelectric vibration reed is immersed in liquid, and the CI value becomes high. For this reason, the measurement using the piezoelectric vibration reed for the mass measurement can be reliably performed even in liquid. For the voltage controlled oscillator, a voltage controlled quartz oscillator (VCXO), a voltage controlled SAW oscillator (VCSO), and the like may be used. Moreover, the phase detection unit may consist of a phase comparator, a phase detector, and the like. Then, the control voltage output unit may consist of a low pass filter, or the like.

The piezoelectric vibration reed is advantageously connected to a coil in parallel or series. If the coil is connected to the piezoelectric vibration reed in parallel, a coil having an inductance to generate a parallel resonance with an inter-electrode capacitance of an equivalence circuit of the piezoelectric vibration reed is selected. In this case, the frequencies of parallel resonance had better be tuned in series resonance frequencies of a piezoelectric vibration reed. Moreover, if the coil is connected to the piezoelectric vibration reed in series, a coil is selected which has an inductance not to generate electrical series resonance between the coil and the piezoelectric vibration reed in the vicinity of the resonance frequency of the piezoelectric vibration reed. In this case, the impedance characteristics including the piezoelectric vibration reed and an inductance connected thereto in series is adjusted to change sufficiently in phase of the resonance frequency. By doing so, in the case of immersing the piezoelectric vibration reed in liquid, even when the piezoelectric vibration reed is not rotated to 0° in phase in the series resonance frequency, the piezoelectric vibration reed can be forced to excite stably, and then it is possible to measure the mass in liquid.

Between the voltage controlled oscillator and the phase detection unit, a phase shifter may be disposed, which delays or advances the phase of the excitation signal. When the piezoelectric vibration reed is immersed in liquid, if the phase in the resonance frequency does not change sufficiently as described above, the phase of the excitation signal to be compared with that of the resonance frequency is adjusted to be delayed or advanced. Accordingly, the phase of the excitation signal to be supplied to the piezoelectric vibration reed can be coincided with the phase of the output signal of the piezoelectric vibration reed in the vicinity of the series resonance frequency of the piezoelectric vibration reed. Further, it is possible to allow the frequency of the excitation signal outputted from the voltage controlled oscillator to coincide with the frequency of the output signal of the piezoelectric vibration reed. Accordingly, the detection of the vibration frequency of the piezoelectric vibration reed and the mass measurement in liquid become possible. Moreover, to detect more accurately the series resonance frequency of the piezoelectric vibrator, a difference between the series resonance frequency and a phase zero frequency by the parallel capacitance of the piezoelectric vibrator can be corrected through the phase shifter.

Moreover, in the present invention, a multiplier may be provided in an output side of the voltage controlled oscillator. Through this multiplier, the excitation signal may be supplied to the piezoelectric vibration reed and the phase detection unit. Accordingly, even when the resonance frequency of the piezoelectric vibration reed is a high frequency, it is possible to use a voltage controlled oscillator for a low frequency, convert a output signal (an excitation signal) from the voltage controlled oscillator into a high frequency signal by the multiplier and supply the high frequency signal to the piezoelectric vibration reed, thereby making the excitation circuit cheaply. Then, in case of converting the output signal of the voltage controlled oscillator into the high frequency signal by the multiplier, a divider may be advantageously disposed between the piezoelectric vibration reed and the phase detection unit, and between the multiplier and the phase detection unit. By converting the high frequency excitation signal and the output signal of the piezoelectric vibration reed into low frequency signals through the divider, the phase detection unit or the control voltage output unit can be made with a circuit constitution for low frequency, thereby the excitation circuit being made cheaply. Moreover, high frequency processing units can be reduced, and affect of noise and the like can be decreased.

The phase detection unit and the control voltage output unit can be made with digital circuits. As a result, an integrated circuitry of a circuit becomes easy, and the miniaturization can be planned. In this case, between the phase detection unit and the control voltage output unit, a charge pump may be provided. By providing the charge pump, the output signal of the phase detection unit can be converted into high voltage, and then an output of the control voltage output unit becomes larger, which allows the voltage controlled oscillator to operate reliably. Moreover, the control voltage output unit may consist of a digital signal processor. Accordingly, a high speed processing can be realized and then the noise in the measurement can be reduced.

Further, a plurality of the piezoelectric vibration reeds may be provided, and a switch unit for switching sequentially the piezoelectric vibration reeds to supply the excitation signal may be provided between the piezoelectric vibration reeds and the voltage controlled oscillator. Accordingly, multiple detection units of the measurement apparatus can be easily planned. Moreover, in the case of providing a plurality of the piezoelectric vibration reeds, the switch unit may be advantageously disposed between the piezoelectric vibration reed and the voltage controlled oscillator, and between the piezoelectric vibration reeds and the phase detection unit. Accordingly, when the excitation frequency of the piezoelectric vibration reed is a high frequency, it is possible to remove a trouble that the operation of the oscillation circuit becomes unstable. Then, the piezoelectric vibration reed may be the one for measurement in liquid which has the sensitive film only on one side surface thereof or the one for measurement in air which has the sensitive films on both side surfaces thereof.

Then, the measurement apparatus according to the present invention includes the excitation circuit of the piezoelectric vibration reed for mass measurement as described above. Accordingly, a mass measurement apparatus having the above described effects can be obtained.

Brief Description of the Drawings

| | |
|---|---|
| Fig. 1 | is a view illustrating a measurement apparatus according to an embodiment of the present invention. |
| Fig. 2 | is a view showing phase-frequency characteristics of a piezoelectric vibration reed. |
| Fig. 3 | is a view showing reactance-frequency characteristics of the piezoelectric vibration reed. |
| Fig. 4 | is a view illustrating an excitation circuit according to a second embodiment. |
| Fig. 5 | is a view illustrating an excitation circuit according to a third embodiment. |
| Fig. 6 | is a view showing reactance-frequency characteristics of the second and third embodiments. |
| Fig. 7 | is a block diagram of an excitation circuit according to a fourth embodiment. |
| Fig. 8 | is a block diagram of an excitation circuit according to a fifth embodiment. |
| Fig. 9 | is a block diagram of an excitation circuit according to a sixth embodiment. |
| Fig. 10 | is a block diagram of an excitation circuit according to a seventh embodiment. |
| Fig. 11 | is a block diagram of an excitation circuit according to an eighth embodiment. |
| Fig. 12 | is a block diagram of an excitation circuit according to a ninth embodiment. |
| Fig. 13 | is a block diagram of an excitation circuit according to a tenth embodiment. |
| Fig. 14 | is a block diagram of an excitation circuit according to an eleventh embodiment. |
| Fig. 15 | is a view illustrating an example of a measurement method according to an embodiment. |
| Fig. 16 | is a block diagram of essential units of an excitation circuit according to a twelfth embodiment. |
| Fig. 17 | is a block diagram of an excitation circuit according to a thirteenth embodiment. |

Best Mode for Carrying out The Invention

The preferred embodiments of a mass measurement method, a circuit for exciting a piezoelectric vibration reed for mass measurement, and a mass measurement apparatus according to the present invention will be described in detail with reference to the accompanying drawings.

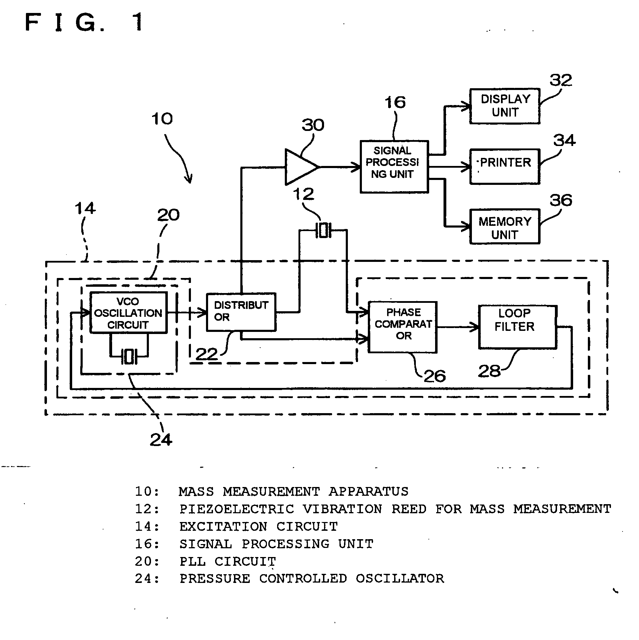

Fig. 1 is a view illustrating a mass measurement apparatus having a circuit for exciting a piezoelectric vibration reed for mass measurement according to a first embodiment of the present invention. In Fig. 1, a mass measurement apparatus 10 has a piezoelectric vibration reed for mass measurement 12, an excitation circuit 14 for exciting the piezoelectric vibration reed for mass measurement 12, and a signal processing unit 16 for calculating the resonance (oscillation) frequency of the piezoelectric vibration reed for mass measurement 12 on the basis of an output signal of the excitation circuit 14 or for calculating the mass of a material attached to the piezoelectric vibration reed for mass measurement 12.

The piezoelectric vibration reed for mass measurement (hereinafter, simply referred as a piezoelectric vibration reed) 12 is formed with a piezoelectric material such as quartz, and includes an AT-cut vibration reed, an AT-cut inverted mesa-type vibration reed, a SAW (Surface Acoustic Wave) vibration element, and the like. Moreover, the piezoelectric vibration reed 12 has a sensitive film (not shown) that is provided to cover an excitation electrode and that is selectively combined with a measurement target material. The piezoelectric vibration reed 12, if it is formed with the AT-cut type vibration reed, has a sensitive film provided on an excitation electrode only at one side surface when it is for measuring in liquid, and has a sensitive film on the both side surfaces of the excitation electrode when it is for measuring in air. Of course, the piezoelectric vibration reed 12 having a sensitive film on one side surface may be used for measuring in air.

The excitation circuit 14 consists of a PLL (Phase Locked Loop) circuit 20 and a distributor 22. The PLL circuit 20 has a voltage controlled oscillator (VCO) 24, a phase comparator 26, and a loop filter 28. The voltage controlled oscillator 24 is to supply an excitation signal to the piezoelectric vibration reed 12, and is oscillatable at a resonance frequency of the piezoelectric vibration reed 12. Further, the voltage controlled oscillator 24 includes a voltage controlled crystal oscillator (VCXO) or voltage controlled SAW oscillator (VCSO), or a VCO oscillator consisting of an inductance element (L), a capacitance element (C), and a resistance element (R). The voltage controlled oscillator 24 outputs the excitation signal to the distributor 22 disposed at an output side of the voltage controlled oscillator 24. The distributor 22 distributes and outputs the excitation signal outputted from the voltage controlled oscillator 24 to the piezoelectric vibration reed 12, the phase comparator 26, and an output amplifier 30, which are connected to the output side of the distributor 22.

The phase comparator 26 constituting the PLL circuit 20 has an input side connected to the piezoelectric vibration reed 12 and the distributor 22. Then, the phase comparator 26, serving as a phase detection unit, calculates a phase difference between a signal outputted from the piezoelectric vibration reed 12 and a signal (the excitation signal) outputted from the distributor 22, and outputs a signal corresponding to the phase difference. The loop filter 28, which is provided at an output side of the phase comparator 28, consists of a low pass filter and serves as a control voltage output unit. That is, the loop filter 28 converts the signal, which the phase comparator 26 outputs, into a direct-current voltage and supplies it to the voltage controlled oscillator 24 as a control voltage. The voltage controlled oscillator 24 varies its oscillation frequency in accordance with the direct-current voltage inputted from the loop filter 28.

The output amplifier 30 amplifies the excitation signal inputted from the distributor 22 and outputs the amplified signal to the signal processing unit 16 disposed at its output side. The signal processing unit 16 consists of a microcomputer or a personal computer, and, on the basis of a signal inputted from the amplifier 30, counts the frequency of the excitation signal by a previously provided processing program or calculates the mass of a material attached to the piezoelectric vibration reed 12 via the sensitive film. Further, a display unit 32, a printer 34, and a memory unit 36 such as a hard disk are connected to the output side of the signal processing unit 16. The display unit 32 can display the results obtained by the signal processing unit 16, the printer 34 can print the results as a hard copy, and the memory unit 36 can store the results.

According to this constitution, the measurement apparatus 10 according to the first embodiment causes an oscillation by forcibly exciting the piezoelectric vibration reed 12 by means of the excitation circuit 14 as described below. The voltage controlled oscillator 24 constituting the PLL circuit 20 is oscillatable in a desired frequency range including the resonance frequency of the piezoelectric vibration reed 12, and outputs a signal having a predetermined frequency to the distributor 22 as the excitation signal. The distributor 22 branches and outputs an inputted excitation signal to the piezoelectric vibration reed 12, the phase comparator 26, and the amplifier 30. The excitation signal inputted to the piezoelectric vibration reed 12 gives vibration energy to the piezoelectric vibration reed 12. Then, a signal outputted from the piezoelectric vibration reed 12 is inputted to the phase comparator 26.

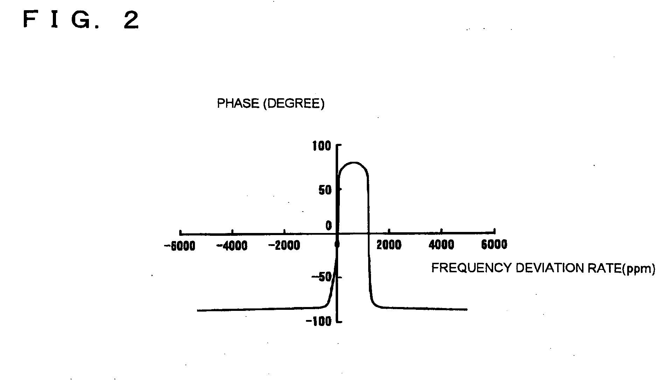

The piezoelectric vibration reed 12 made of quartz can be considered, electrically, as a condenser, if it is not in a resonance state. For this reason, if the frequency of the inputted excitation signal is not in the vicinity of the series resonance frequency of the piezoelectric vibration reed 12, the signal outputted from the piezoelectric vibration reed 12 has a voltage phase delayed by 90 degrees with respect to the current phase, as shown in Fig. 2. That is, the voltage outputted from the piezoelectric vibration reed 12 has a phase delayed by 90 degrees with respect to the inputted excitation signal.

Further, Fig. 2 is a view showing the relation between the frequency and the phase of the piezoelectric vibration reed 12, the horizontal axis representing a deviation rate (unit: ppm) from the series resonance frequency of the piezoelectric vibration reed 12, and the vertical axis representing the phase (unit: degree) of an output signal from the piezoelectric vibration reed 12 with respect to an input signal. Further, as shown in Fig. 2, the piezoelectric vibration reed 12 has a phase of zero if the frequency of the excitation signal becomes gradually higher, from a lower state, than the series resonance frequency and reaches the series resonance frequency. Moreover, if the frequency of the inputted excitation signal becomes higher than the series resonance frequency, the piezoelectric vibration reed 12 becomes electrically inductive, and then the phase is advanced by 90 degrees. Further, if the frequency becomes higher and exceeds an anti-resonance frequency, the piezoelectric vibration reed again becomes capacitive, and then the phase is delayed by 90 degrees.

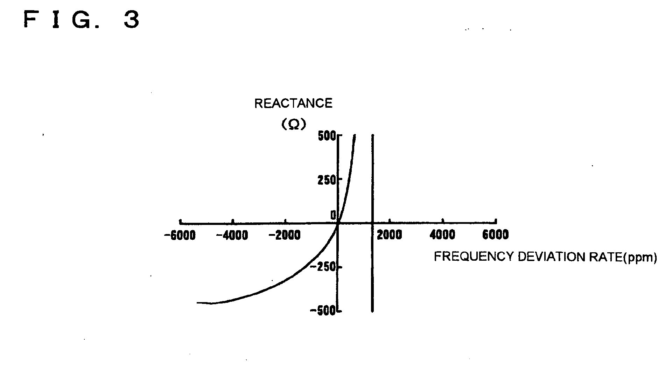

Moreover, if the inputted excitation signal has a frequency varying from a lower frequency than the series resonance frequency to a frequency exceeding the series resonance frequency, the piezoelectric vibration reed 12 has an equivalent reactance varying from negative (capacitive) to positive (inductive), as shown in Fig. 3. Then, the reactance in the series resonance frequency becomes 0, and electrically it can be considered as a resistance.

The phase comparator 26 calculates a phase difference between the signal from the piezoelectric vibration reed 12 and the excitation signal from the distributor 22, and outputs a signal corresponding to the phase difference. The signal outputted from the phase comparator passes through the loop filter 28 made with the low pass filter to be converted into a direct-current voltage, which is supplied to the voltage controlled oscillator 24 as a control signal. The voltage controlled oscillator 24 changes the frequency of the output excitation signal based on the inputted control voltage from the loop filter 28, and outputs the excitation signal having a frequency with no phase difference with respect to the output signal of the piezoelectric vibration reed 12. Accordingly, the phase difference between the excitation signal inputted to the piezoelectric vibration reed 12 and the output signal from the piezoelectric vibration reed 12 becomes zero, thereby exciting the piezoelectric vibration reed 12. Then, if the phase difference between the signal outputted from the piezoelectric vibration reed 12 to the phase comparator 26 and the excitation signal from the distributor 22 becomes zero, the oscillation frequency of the voltage controlled oscillator 24 is locked to its frequency. For this reason, the piezoelectric vibration reed 12 becomes stable and the excitation state thereof continues.

The excitation signal outputted from the voltage controlled oscillator 24 is outputted to the amplifier 30 via the distributor 22, and is then inputted into the signal processing unit 16 after being amplified in the amplifier 30. The signal processing unit 16 counts the frequency of the inputted excitation signal, and calculates the excitation frequency (the resonance frequency) of the piezoelectric vibration reed 12. Accordingly, the signal processing unit 16 can calculates the amount of change in frequency $\Delta f$ ($=f_0-f$) resulting from attachment of the measurement target material onto the piezoelectric vibration reed 12 or detachment of the attached material from the piezoelectric vibration reed 12, to detect the mass, by storing the resonance frequency $f_0$ of the piezoelectric vibration reed 12 prior to start of measurement in a memory or sample-and-hold circuit and simultaneously calculating the resonance frequency $f$ after measurement. Moreover, since the oscillation frequency easily follows the change in resonance frequency of the piezoelectric vibration reed 12 and varies accordingly, the voltage controlled oscillator 24 outputs an excitation signal that easily follows the change in resonance frequency of the piezoelectric vibration reed 12 during measurement. Accordingly, from the change in resonance frequency of the piezoelectric vibration reed 12 which is obtained in the signal processing unit 16, it is possible to determine the concentration of the material based on the rate of attachment to the piezoelectric vibration reed 12, the detachment rate of the material from the piezoelectric vibration reed 12, or the like.

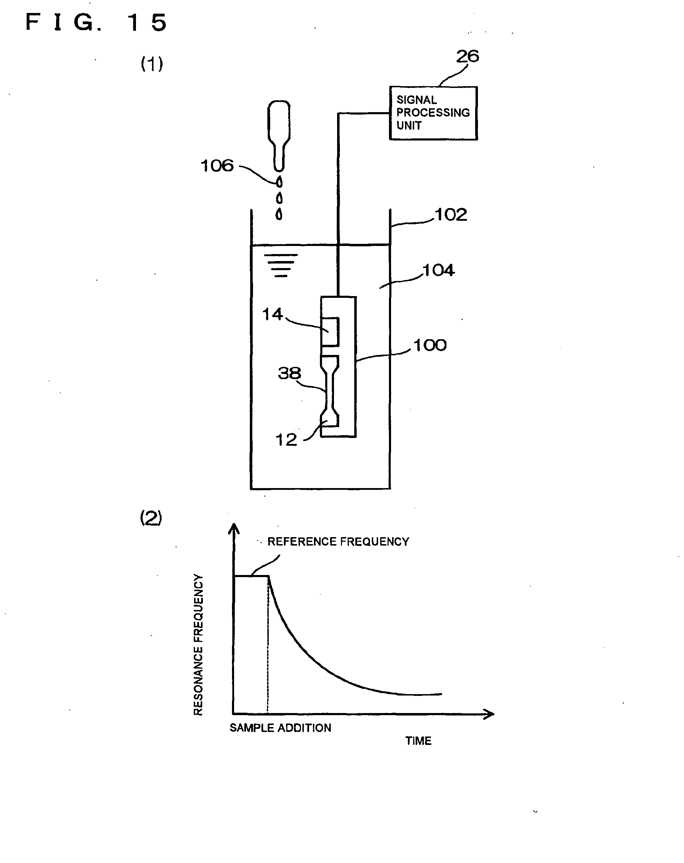

Fig. 15 shows an example of a mass measurement method using the measurement apparatus 10 according to the embodiment, and an example of an in-liquid measurement. The piezoelectric vibration reed 12 shown in Fig. 15(1) is an AT-cut inverted mesa-type piezoelectric vibration reed, and has excitation electrodes (not shown) formed at mesa portions (concave portions) 38 on both surfaces. The sensitive film is provided on the surface of one excitation electrode of the piezoelectric vibration reed 12 such that it is exposed and enclosed in a water-tight case 100 to prevent the excitation electrodes provided at both sides from being shorted in liquid. Moreover, the water-tight case 100 receives the excitation circuit 14 and the amplifier 30 (not shown in this figure) therein.

When an in-liquid measurement using the piezoelectric vibration reed 12 is performed, the water-tight case 100 is immersed in a predetermined liquid 104 being stored in a container 102 to bring the piezoelectric vibration reed 12 into contact with the liquid 104, leaving it as it is until the resonance of the piezoelectric vibration reed 12 in the liquid 104 becomes stable. Once the resonance becomes stable, the resonance frequency is stored as a reference frequency in the signal processing unit 16. Subsequently, a sample (liquid) 106 comprising the measurement target material is added to the liquid 104 by a predetermined amount, and diffused. The measurement target material in the sample 106 is attached (combined) to the sensitive film of the piezoelectric vibration reed 12. For this reason, the weight of the piezoelectric vibration reed 12 changes, and then the resonance frequency changes with time, as shown in Fig. 15(2). Accordingly, by detecting the rate of change of the resonance frequency by the signal processing unit 16, the concentration of the measurement target material in the sample can be calculated. Moreover, when the resonance frequency becomes stable after addition of the sample, the mass of the measurement target material attached to the sensitive film can be calculated from the difference between the resonance frequency and the reference frequency.

Further, measurement may be carried out as follows. First, two containers 102 are prepared, the first one being filled with only a liquid (for example, water or alcohol) which does not comprise the measurement target material while the second being filled with a sample in which the measurement target material is dissolved or dispersed in water or alcohol. Then, an in-liquid reference frequency of the piezoelectric vibration reed 12 in the first container is calculated. Subsequently, by immersing the piezoelectric vibration reed 12 in the sample of the second container, the measurement of the measurement target material is performed. By doing so, the concentration and the like of the measurement target material can be more accurately and simply calculated. Moreover, when the piezoelectric vibration reed 12 is used for in-air measurement, it is preferable to provide the sensitive film on the excitation electrodes of both sides. In this case, the piezoelectric vibration reed 12 is not received in an airtight container. This makes it possible to increase the amount of the target material to attach to the piezoelectric vibration reed 12, and therefore perform the measurement more accurately.

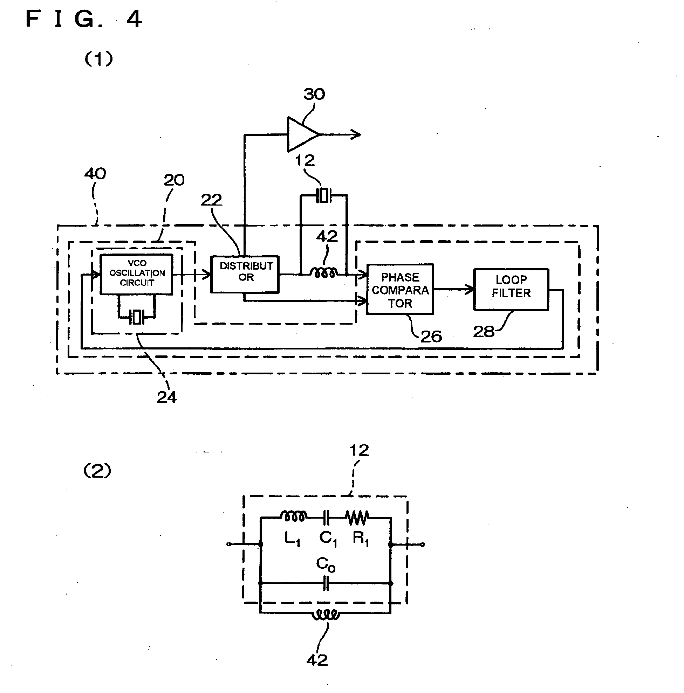

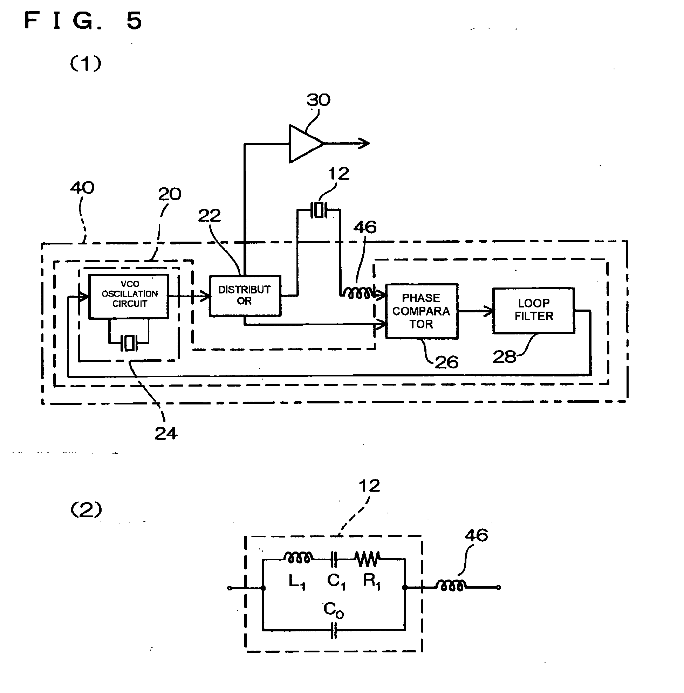

Fig. 4 is a view illustrating an excitation circuit according to a second embodiment, and Fig. 5 is a view illustrating an excitation circuit according to a third embodiment. An excitation circuit 40 of the second embodiment shown in Fig. 4 has a coil 42 connected in parallel to the piezoelectric vibration reed 12 between the distributor 22 and the phase comparator 26, as shown in Fig. 4(1). That is, the coil 42, as shown in Fig. 4(2), is connected in parallel to an inter-electrode capacitance $C_0$ of an equivalent circuit of the piezoelectric vibration reed 12. The other constitutions are same as those of the first embodiment as shown in Fig. 1.

An excitation circuit 44 of the third embodiment has a coil 46 connected in series to the piezoelectric vibration reed 12 between the distributor 22 and the phase comparator 26, as shown in Fig. 5(1). The equivalent circuit is shown in Fig. 5(2). The other constitutions are same as those of the first embodiment as shown in Fig. 1.

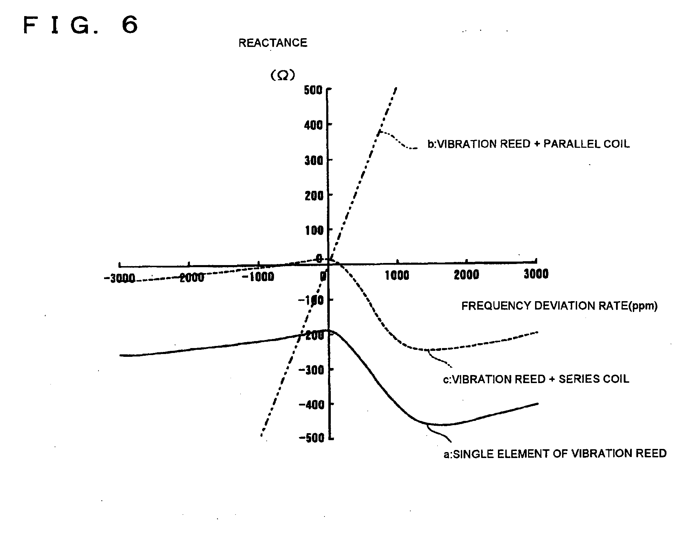

As described above, the piezoelectric vibration reed 12 has an extremely large in-liquid CI value when compared with an in-air CI value. For this reason, even though the piezoelectric vibration reed 12 uses the oscillation circuit adjusted to oscillate in air, if the piezoelectric vibration reed 12 is immersed in liquid, it exhibits, as a curve shown in Fig. 6, a capacitive reactance even in the series resonance frequency, and the phase is not rotated, such that the PLL is not locked with zero phase.

Herein, in the excitation circuit 40 of the second embodiment, the coil 42 is connected in parallel to the piezoelectric vibration reed 12 so as to generate resonance between the coil 42 and the inter-electrode capacitance $C_0$. Accordingly, if the resonance is generated between the coil 42 and the inter-electrode capacitance $C_0$, an impedance of the resonance circuit becomes extremely larger, and then the inter-electrode capacitance $C_0$ becomes invisible from an exterior. For this reason, the reactance of the piezoelectric vibration reed 12 is varied as a straight line b of Fig. 6 and passes through a zero phase in the vicinity of the resonance frequency of the piezoelectric vibration reed 12. That is, the piezoelectric vibration reed 12 is excited with an excitation signal outputted from the voltage controlled oscillator 24, such that the phase difference between the excitation signal and a signal outputted from the piezoelectric vibration reed 12 coincides in the vicinity of a zero phase of the piezoelectric vibration reed, and both frequencies coincide.

Moreover, as the excitation circuit 44 of the third embodiment shown in Fig. 5, when the coil 46 is connected in series to the piezoelectric vibration reed 12, the reactance in the vicinity of the resonance frequency of the piezoelectric vibration reed 12 is varied as a curve c of Fig. 6. Accordingly, by connecting the coil 46 in series to the piezoelectric vibration reed 12, the circuit formed by both of these becomes inductive in the vicinity of the series resonance frequency, and the phase change passes through a zero phase. Therefore, the phase of the excitation signal outputted from the voltage controlled oscillator 24 and the phase of the piezoelectric vibration reed 12 coincide with each other with a zero phase, and the frequencies of the both output signals coincide.

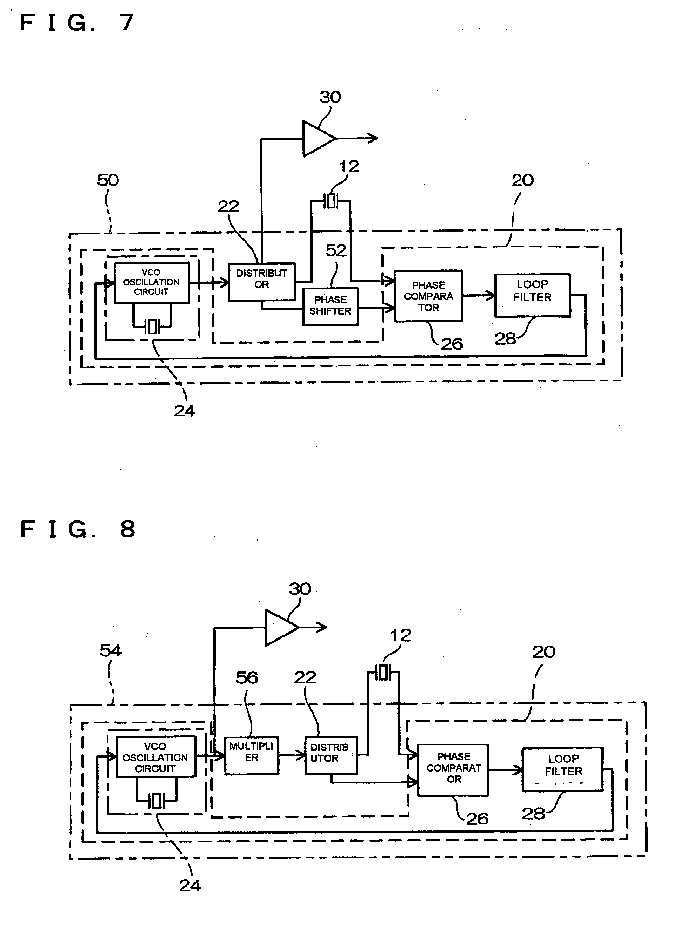

Fig. 7 is a block diagram of a fourth embodiment. An excitation circuit 50 according to the fourth embodiment has a phase shifter 52 provided between the distributor 22 and the phase comparator 26 of the PLL circuit 20. The phase shifter 52 adjusts the phase of a signal from the distributor 22 to be delayed or advanced, and inputs the adjusted signal to the phase comparator 26. The other constitutions are same as those of the first embodiment.

As described above, if the piezoelectric vibration reed 12 is immersed in liquid, the CI value becomes larger so that the phase is not rotated to a zero degree, and the PLL is not locked. So, in the fourth embodiment, the phase shifter 52 is provided between the distributor 22 and the phase comparator 26 to adjust the phase such that the PLL circuit allows the phase of a signal from the piezoelectric vibration reed 12 and the phase of the excitation signal from the voltage controlled oscillator 24 to coincide with each other even when the phase change in resonance frequency of the piezoelectric vibration reed 12 is small. Accordingly, even when the phase of the signal from the piezoelectric vibration reed 12 is not rotated to a zero degree, the phase difference between an output signal of the voltage controlled oscillator 24 having passed through the phase shifter 52 and the signal from the piezoelectric vibration reed 12 can be zero, and then the frequencies of the both signals can be reliably coincided with each other. Hence, the mass of the attached material to the piezoelectric vibration reed 12 or the mass of the detached material from the piezoelectric vibration reed 12 can be measured.

Fig. 8 is a block diagram of a fifth embodiment. An excitation circuit 54 of this embodiment has a multiplier 56 provided between the voltage controlled oscillator 24 and the distributor 22. Moreover, an output amplifier 30 is connected between the voltage controlled oscillator 24 and the multiplier 56. The other constitutions are same as those of the first embodiment. According to this constitution of the fifth embodiment, even when the piezoelectric vibration reed 12 is for a high frequency, the voltage controlled oscillator 24 having a low oscillation frequency can be used, and then the cost can be cheaper. In other words, the low frequency excitation signal from the voltage controlled oscillator 24 is converted into a high frequency by the multiplier 56, and supplied to the piezoelectric vibration reed 12 via the distributor 22 as a high frequency excitation signal.

Further, since the amplifier 30 is connected to an input side of the multiplier 56, it is not needed to amplify a high frequency signal, and then the cost can be cheaper. Then, the signal processing unit 16 (not shown in this drawing, see Fig. 1) connected to an output side of the amplifier 30 calculates the resonance frequency of the piezoelectric vibration reed 12 by means of an integral multiplication of the frequency of the excitation signal from the voltage controlled oscillator 24 by multiplicator of the multiplier 56. Moreover, the amplifier 30 may be connected to the output side of the multiplier 56, i.e., the distributor 22.

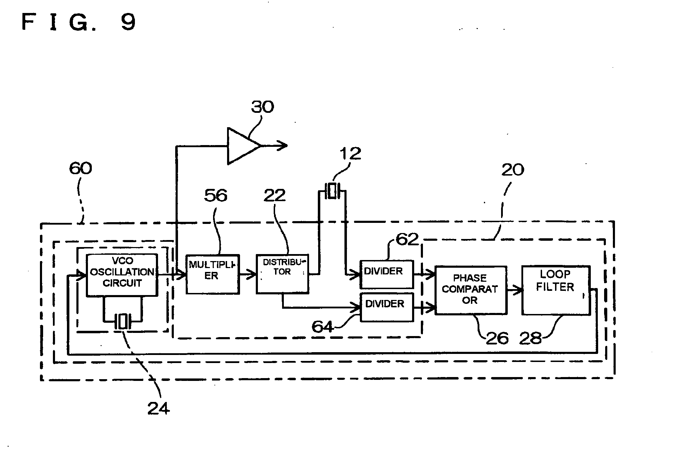

Fig. 9 is a block diagram of a sixth embodiment. An excitation circuit 60 of the sixth embodiment has dividers 62 and 64 between the piezoelectric vibration reed 12 and the phase comparator 26 and between the distributor 22 and the phase comparator 26. The other constitutions are same as those of the fifth embodiment as shown in Fig. 8.

In the excitation circuit 60 arranged in such a manner, the multiplier 56 multiplies a low frequency excitation signal from the voltage controlled oscillator 24 into a high frequency signal. Then, the high frequency excitation signal from the multiplier 56 is supplied to the piezoelectric vibration reed 12 via the distributor 22. A signal from the piezoelectric vibration reed 12 is returned into a low frequency by the divider 62, and then inputted into the phase comparator 26. Meanwhile, a high frequency excitation signal inputted from the distributor 22 to the phase comparator 26 is returned into a low frequency signal by the divider 64. Accordingly, the PLL circuit 20, which consists of the voltage controlled oscillator 24, the phase comparator 26 and the loop filter 28, can be for a low frequency signal, even when the piezoelectric vibration reed 12 is for a high frequency, so that the cost can be cheaper. Further, it rarely undergoes influences such as a disturbance, and it can perform a high precise measurement.

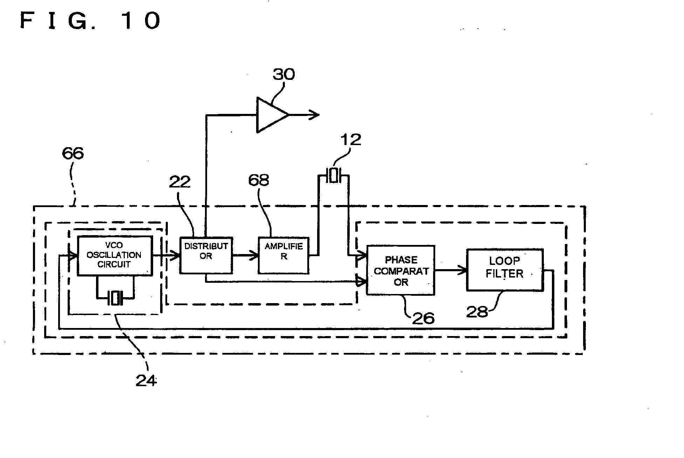

Fig. 10 is a block diagram of a seventh embodiment. An excitation circuit 66 of the seventh embodiment has an amplifier 68 between the distributor 22 and the piezoelectric vibration reed 12 in order to amplify an output signal of the distributor 22 and supply the amplified output signal to the piezoelectric vibration reed 12. The other constitutions are same as those of the first embodiment. The excitation circuit 66 arranged in such a manner can supply the piezoelectric vibration reed 12 with a signal strong enough to forcibly excite the piezoelectric vibration reed 12 even when a resistance value of the piezoelectric vibration reed becomes larger or the Q value is lowered.

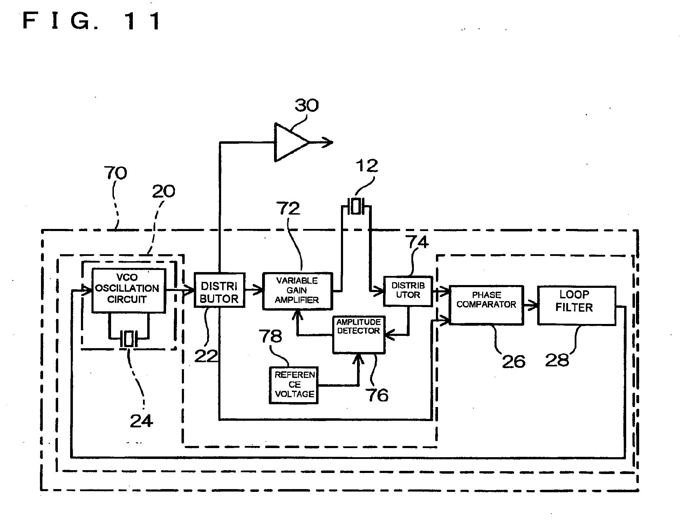

Fig. 11 is a block diagram of an eighth embodiment. An excitation circuit 70 according to the eighth embodiment has a variable gain amplifier 72 provided between the distributor 22 and the piezoelectric vibration reed 12. Moreover, at an output side of the piezoelectric vibration reed 12, a second distributor 74 is provided between the piezoelectric vibration reed 12 and the phase comparator 26. To an output side of the second distributor 74, the phase comparator 26 and an amplitude detector 76 are connected. Then, the amplitude detector 76 receives a reference voltage from a reference voltage setting unit 78 as an input and outputs an output signal to the variable gain amplifier 72.

In the excitation circuit 70 arranged in such a manner, the excitation signal from the voltage controlled oscillator 24 is branched out by the distributor 22, and a signal supplied to the piezoelectric vibration reed 12 is amplified by the variable gain amplifier 72. Then, a signal from the piezoelectric vibration reed 12 is branched out by the second distributor 74, and inputted to the phase comparator 26 and the amplitude detector 76. The amplitude detector 76 compares amplitude (intensity) of the output signal of the piezoelectric vibration reed 12 which is inputted through the second distributor 74 with the amplitude of a reference voltage from the reference voltage setting unit 78, and supplies a signal corresponding to the deviation thereof to the variable gain amplifier 72. If the amplitude of the output signal of the piezoelectric vibration reed 12 is smaller than the amplitude of the reference voltage, the variable gain amplifier 72 changes its amplification factor in accordance with a degree (deviation) of smallness. In other words, the larger the deviation is, the larger the variable gain amplifier 72 amplifies an input signal, and the amplified signal is supplied to the piezoelectric vibration reed 12. Accordingly, the piezoelectric vibration reed 12 can be reliably oscillated by forcible excitation. Moreover, since the output signal from the amplitude detector 76 to the variable gain amplifier 72 is proportional to the impedance change of the piezoelectric vibration reed 12. By measuring this, it is possible to know the change in viscosity of a liquid contact material at a surface of a vibrator.

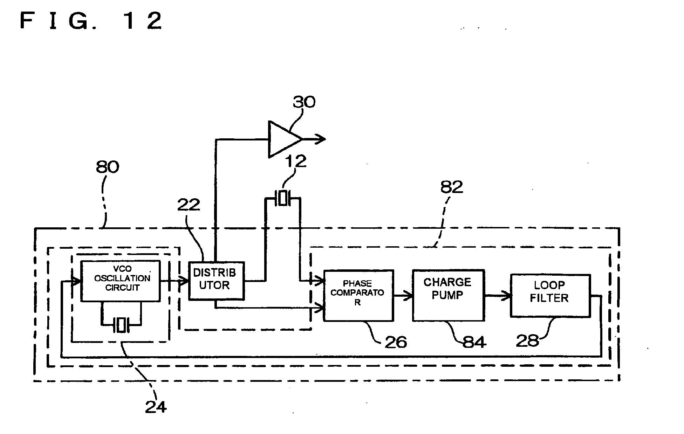

Fig. 12 is a block diagram of a ninth embodiment. An excitation circuit 80 of this embodiment has a digitalized PLL circuit 82. The PLL circuit 82 has a charge pump 84 provided between the phase comparator 26 and the loop filter 28 which are made with a digital circuit. The charge pump 84 converts the output signal from the phase comparator 26 into a high voltage and allows it to be inputted to the loop filter 28. Accordingly, a direct-current voltage, which enables the voltage controlled oscillator 24 to be reliably operated, is outputted from the loop filter 28. By digitalizing the PLL circuit 82 in such a manner, an integration circuitry is facilitated, and then the circuit can be easily miniaturized. Further, the distributor 22 is connected to an output side of the voltage controlled oscillator 24. To an output side of the distributor 22, the piezoelectric vibration reed 12, the phase comparator 26 and the output amplifier 30 are connected.

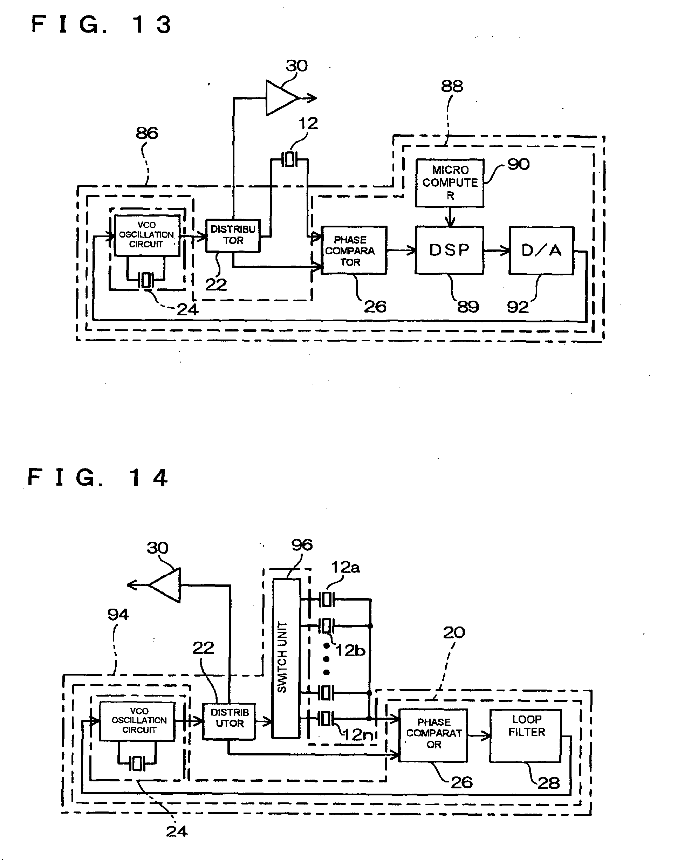

Fig. 13 is a block diagram of a tenth embodiment. In an excitation circuit 86 of this embodiment, a PLL circuit 88 is digitalized as in the ninth embodiment. At an output side of the phase comparator 26, a DSP (Digital Signal Processor) 89 is provided instead of the loop filter. Moreover, the DSP 89 is connected to a microcomputer 90 and is connected at its output side to a digital/analog converter (D/A) 92. The DSP 89 and the D/A 92 constitute a control voltage output unit, and an output side of the D/A 92 is connected to the voltage controlled oscillator 24. An output side of the voltage controlled oscillator 24 is connected to the piezoelectric vibration reed 12, the phase comparator 26 and the amplifier 30 via the distributor 22.

When the PLL circuit 88 is arranged in such a manner, the DSP 89 outputs a digital signal equivalent to a voltage corresponding to the phase difference detected by the phase comparator 26. The D/A 92 converts an output signal of the DSP 89 into an analog direct-current voltage, and supplies it to the voltage controlled oscillator 24. Further, the microcomputer 90 detects the output signal from the DSP 89, performs a data processing on it, and changes a filter factor of the DSP 89. Accordingly, a noise in a response time required for the measurement can be reduced.

Fig. 14 is a block diagram of an eleventh embodiment. In an excitation circuit 94 of this embodiment, an output side of the distributor 22 is connected to the phase comparator 26 and the output amplifier 30, while one ends of a plurality of the piezoelectric vibration reeds 12 (12a to 12n) are connected in parallel to each other via a switch unit 96. The other ends of the piezoelectric vibration reeds 12 are connected to the phase comparator 26. The other constitutions are same as those of the first embodiment. In the excitation circuit 94 arranged in such a manner, the switch unit 96 sequentially switches a plurality of the piezoelectric vibration reeds 12 to connect with the distributor 22. Accordingly, the multi-piezoelectric vibration reed 12, i.e., the multi-detecting unit of the mass measurement apparatus can be easily made.

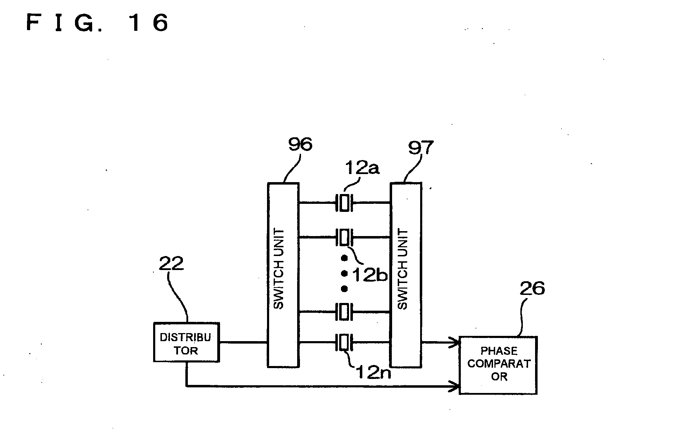

Fig. 16 is a block diagram showing essential units of a twelfth embodiment, which shows a modification example of the eleventh embodiment shown in Fig. 14. In this embodiment, between each piezoelectric vibration reed 12 (12a to 12n) and the distributor 22, and between each piezoelectric vibration reed 12 and the phase comparator 26, switch units 96 and 97 are provided. That is, each piezoelectric vibration reed 12 is connected in parallel to the distributor 22 via the switch unit 96, and is simultaneously connected in parallel to the phase comparator 26 via the switch unit 97. Accordingly, each piezoelectric vibration reed 12 can be reliably separated from the circuit by the switch units 96 and 97. The other constitutions are the same as in Fig. 14. By this arrangement, the multi-piezoelectric vibration reed 12, i.e., the multi-detecting unit of the mass measurement apparatus can be easily made.

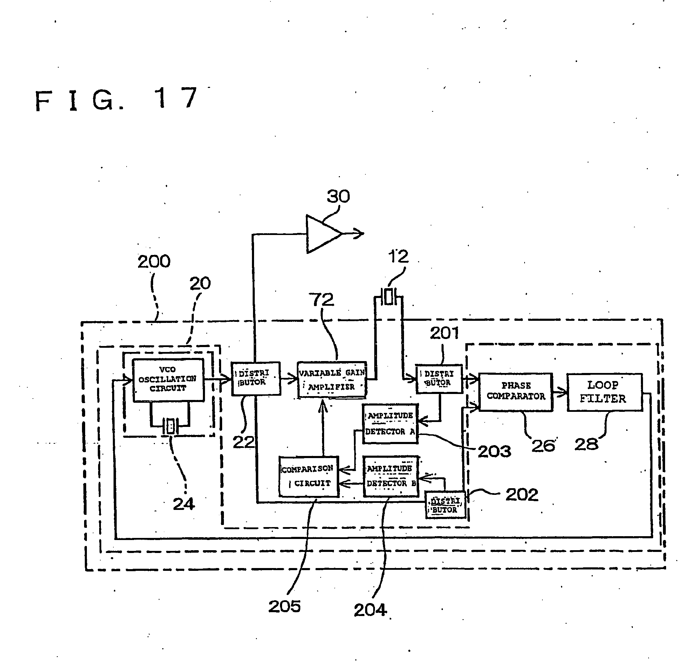

Fig. 17 is a block diagram showing essential units of a thirteen embodiment, which shows a modification example of the eighth embodiment shown in Fig. 11. In this embodiment, an output signal from the piezoelectric vibration reed 12 is branched out through a distributor 201, and the branched output signal is supplied to an amplitude detector A 203. Moreover, the excitation signal from the voltage controlled oscillator 24 is branched out through the distributor 22 and a distributor 202, and the branched excitation signal is supplied to an amplitude detector B 204. A comparison circuit 205 compares an output signal of the amplitude detector A 203 with an output signal of the amplitude detector B 204. In other words, it compares the amplitude of the excitation signal from the voltage controlled oscillator 24 with that of an output signal of the piezoelectric vibration reed 12, and adjusts a gain of the variable gain amplifier 72 by the difference (deviation) thereof. As a result, it is possible to detect the impedance change in the piezoelectric vibration reed 12, i.e., a loss of the piezoelectric vibration reed 12, on the basis of a voltage of the excitation signal from the voltage controlled oscillator 24. Further, the amplitude of the excitation signal from the voltage controlled oscillator 24 is adjusted to be equal to that of the output signal of the piezoelectric vibration reed 12, by adjustment of the gain of the variable gain amplifier 72. The other constitutions are same as those of the eighth embodiment shown in Fig. 11.

In this embodiment, an output signal of the comparison circuit 205, that is, a signal for adjusting the gain of the variable gain amplifier 72 is detected by means of an amplifier not shown so that a resistance value of the piezoelectric vibration reed 12 can be measured. By measuring the resistance value, the change in viscosity of a liquid contact material at a surface of a vibrator can be found.

Further, the measurement apparatus 10 according to the each embodiment can be applied to a biosensor for detection of protein or contaminated material in a liquid or an environment measurement apparatus, a viscometer, an ion sensor, or an odor sensor. In case of using the measurement apparatus 10 for the viscometer, the piezoelectric vibration reed 12 is brought into contact with a fluid to be measured. In this case, as the viscosity of the fluid to be measured increases, the impedance of the piezoelectric vibration reed increases, so that the resonance frequency varies. Accordingly, the viscosity of the fluid can be detected. Meanwhile, when the measurement apparatus 10 is used for an ion sensor, an ion absorption material is advantageously applied as the sensitive film. Moreover, in case of being used for an odor sensor, an odor absorption material is advantageously applied as the sensitive film.

## Claims

1. A measurement method for detecting mass based on a change in vibration frequency of a piezoelectric vibration reed for mass measurement, the measurement method comprising:

   a step of supplying an excitation signal to excite the piezoelectric vibration reed and calculating a phase difference between an output signal of the piezoelectric vibration reed and the excitation signal; and
   a step of adjusting the frequency of the excitation signal corresponding to the phase difference and calculating the vibration frequency of the piezoelectric vibration reed.

2. A circuit for exciting a piezoelectric vibration reed for mass measurement, comprising:

   a voltage controlled oscillator for supplying an excitation signal to the piezoelectric vibration reed for mass measurement;
   a phase detection unit for calculating a phase difference between the excitation signal from the voltage controlled oscillator and an output signal from the piezoelectric vibration reed; and
   a control voltage output unit for supplying a voltage corresponding to the phase difference calculated by the phase detection unit to the voltage controlled oscillator, and allowing the excitation signal having the same frequency as the frequency of the output signal of the piezoelectric vibration reed to be outputted to the voltage controlled oscillator.

3. A circuit for exciting a piezoelectric vibration reed for mass measurement according to Claim 2, wherein the piezoelectric vibration reed is connected to a coil in parallel or in series.

4. A circuit for exciting a piezoelectric vibration reed for mass measurement according to Claim 2, wherein a phase shifter for controlling a phase delay or advance of the excitation signal is provided between the voltage controlled oscillator and the phase detection unit.

5. A circuit for exciting a piezoelectric vibration reed for mass measurement according to any one of Claims 2 to 4, wherein a multiplier is provided at an output side of the voltage controlled oscillator, and the excitation signal is supplied to the piezoelectric vibration reed and the phase detection unit through the multiplier.

6. A circuit for exciting a piezoelectric vibration reed for mass measurement according to Claim 5, wherein dividers are provided between the piezoelectric vibration reed and the phase detection unit and between the multiplier and the phase detection unit.

7. A circuit for exciting a piezoelectric vibration reed for mass measurement according to any one of Claims 2 to 6, wherein the phase detection unit and the control voltage output unit are made with digital circuits.

8. A circuit for exciting a piezoelectric vibration reed for mass measurement according to Claim 7, wherein a charge pump is provided between the phase detection unit and the control voltage output unit.

9. A circuit for exciting a piezoelectric vibration reed for mass measurement according to Claim 7, wherein the control voltage output unit has a digital signal processor.

10. A circuit for exciting a piezoelectric vibration reed for mass measurement according to any one of Claims 2 to 9, wherein a plurality of the piezoelectric vibration reeds are provided, a switch unit is provided between the piezoelectric vibration reeds and the voltage controlled oscillator to supply the excitation signal by sequentially switching the piezoelectric vibration reeds, or switch units are provided between the piezoelectric vibration reeds and the voltage controlled oscillator and between the piezoelectric vibration reeds and the phase detection unit.

11. A circuit for exciting a piezoelectric vibration reed for mass measurement according to any one of Claims 2 to 10, wherein the piezoelectric vibration reed is for measurement in liquid, which has a sensitive film only on one side surface thereof.

12. A circuit for exciting a piezoelectric vibration reed for mass measurement according to any one of Claims 2 to 10, wherein the piezoelectric vibration reed is for measurement in air, which has a sensitive film on both side surfaces or on one surface thereof.

13. A circuit for exciting a piezoelectric vibration reed for mass measurement according to Claim 2, wherein a variable gain amplifier is provided between the voltage controlled oscillator and the piezoelectric vibration reed and uniformly controls an input voltage to a phase comparator.

14. A mass measurement apparatus including a circuit for exciting a piezoelectric vibration reed for mass measurement according to any one of Claims 2 to 13.

# F I G. 1

10: MASS MEASUREMENT APPARATUS
12: PIEZOELECTRIC VIBRATION REED FOR MASS MEASUREMENT
14: EXCITATION CIRCUIT
16: SIGNAL PROCESSING UNIT
20: PLL CIRCUIT
24: PRESSURE CONTROLLED OSCILLATOR

F I G. 2

PHASE (DEGREE)

FREQUENCY DEVIATION RATE(ppm)

F I G. 3

# F I G. 4

### (1)

### (2)

# F I G. 5

## (1)

## (2)

F I G. 6

REACTANCE

(Ω)

b:VIBRATION REED + PARALLEL COIL

FREQUENCY DEVIATION RATE(ppm)

c:VIBRATION REED + SERIES COIL

a:SINGLE ELEMENT OF VIBRATION REED

# F I G. 7

# F I G. 8

F I G. 9

# F I G. 1 0

F I G. 1 1

# F I G. 1 2

F I G. 1 3

30

88

86

12

MICRO COMPUTER 90

VCO OSCILLATION CIRCUIT

DISTRIBU TOR

PHASE COMPARA TOR

DSP

D/A

24

22

26

89

92

F I G. 1 4

30

96

12a

94

20

12b

22

VCO OSCILLATION CIRCUIT

DISTRIB UTOR

SWITCH UNIT

PHASE COMPARAT OR

LOOP FILTER

12n

24

26

28

# FIG. 15

(1)

(2)

F I G. 1 6

F I G. 1 7

| INTERNATIONAL SEARCH REPORT | | International application No. |
|---|---|---|
| | | PCT/JP2004/004103 |

**A. CLASSIFICATION OF SUBJECT MATTER**
Int.Cl⁷ G01G3/16, G01N5/02

According to International Patent Classification (IPC) or to both national classification and IPC

**B. FIELDS SEARCHED**

Minimum documentation searched (classification system followed by classification symbols)
Int.Cl⁷ G01G3/16, G01N5/02

Documentation searched other than minimum documentation to the extent that such documents are included in the fields searched
Jitsuyo Shinan Koho        1922–1996   Toroku Jitsuyo Shinan Koho   1994–2004
Kokai Jitsuyo Shinan Koho   1971–2004   Jitsuyo Shinan Toroku Koho   1996–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 6-308009 A  (Yokogawa Electric Corp.),<br>04 November, 1994 (04.11.94),<br>Fig. 1<br>(Family: none) | 1-9,12-14<br>10,11 |
| Y | JP 5-223721 A  (Sony Corp.),<br>31 August, 1993 (31.08.93),<br>Fig. 2<br>(Family: none) | 10 |
| Y | JP 6-241972 A  (Nippon Telegraph And Telephone<br>Corp.),<br>02 September, 1994 (02.09.94),<br>Figs. 1, 3<br>(Family: none) | 10 |

☒ Further documents are listed in the continuation of Box C.      ☐ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search<br>15 April, 2004 (15.04.04) | Date of mailing of the international search report<br>11 May, 2004 (11.05.04) |
|---|---|
| Name and mailing address of the ISA/<br>Japanese Patent Office | Authorized officer |
| Facsimile No. | Telephone No. |

Form PCT/ISA/210 (second sheet) (January 2004)

**EP 1 607 725 A1**

| | INTERNATIONAL SEARCH REPORT | International application No. |
|---|---|---|
| | | PCT/JP2004/004103 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-132646 A (Ricoh Co., Ltd.), 22 May, 1998 (22.05.98), Fig. 2 (Family: none) | 11 |

Form PCT/ISA/210 (continuation of second sheet) (January 2004)

28